# FASCICULE DE BREVET EUROPEEN

(11) **EP 4 298 460 B1**
(45) Date de publication et mention de la délivrance du brevet: **02.04.2025**
(21) Numéro de dépôt: 22712273.6
(22) Date de dépôt: 22.02.2022
(51) Int. Cl.: G01S 7/497, G01S 7/481, G02B 6/42, G02F 1/295

(54) **EMETTEUR OPTOELECTRONIQUE A ANTENNE RESEAU A COMMANDE DE PHASE COMPORTANT UNE SOURCE LASER EVASEE**
OPTOELEKTRONISCHER EMITTER MIT PHASENGESTEUERTER GRUPPENANTENNE MIT AUFGEWEITETER LASERQUELLE
OPTOELECTRONIC EMITTER WITH PHASED-ARRAY ANTENNA COMPRISING A FLARED LASER SOURCE

(30) Priorité: 24.02.2021 FR 2101808
(43) Date de publication de la demande: 03.01.2024
(73) Titulaire: Commissariat à l'Energie Atomique et aux Energies Alternatives, 75015 Paris (FR)
(72) Inventeur: FOWLER, Daivid, 38054 Grenoble Cedex 09 (FR); GUERBER, Sylvain, 38054 Grenoble Cedex 09 (FR); CHARBONNIER, Benoit, 38054 Grenoble Cedex 09 (FR)
(74) Mandataire: INNOV-GROUP
(86) Numéro de dépôt international: PCT/EP2022/054402
(87) Numéro de publication internationale: WO 2022/180039

(56) Documents cités:
- US-A1- 2018 217 472
- WEIHUA GUO ET AL: "InP photonic integrated circuit with on-chip tunable laser source for 2D optical beam steering", OPTICAL FIBER COMMUNICATION CONFERENCE AND EXPOSITION AND THE NATIONAL FIBER OPTIC ENGINEERS CONFERENCE (OFC/NFOEC), 2013, IEEE, 17 March 2013 (2013-03-17), pages 1 - 3, XP032679289, ISBN: 978-1-4799-0457-0, [retrieved on 20130614], DOI: 10.1364/OFC.2013.OTH3I.7
- J. C. HULME ET AL: "Fully integrated hybrid silicon two dimensional beam scanner", OPTICS EXPRESS, vol. 23, no. 5, 25 February 2015 (2015-02-25), pages 5861, XP055455951, DOI: 10.1364/OE.23.005861
- HANS WENZEL ET AL: "High-brightness diode lasers", COMPTES RENDUS - PHYSIQUE., vol. 4, no. 6, 1 July 2003 (2003-07-01), FR, pages 649 - 661, XP055335626, ISSN: 1631-0705, DOI: 10.1016/S1631-0705(03)00074-4
- DELEPINE S ET AL: "HOW TO LAUNCH 1 W INTO SINGLE-MODE FIBER FROM A SINGLE 1.48-MUM FLARED RESONATOR", IEEE JOURNAL OF SELECTED TOPICS IN QUANTUM ELECTRONICS, IEEE, USA, vol. 7, no. 2, 1 March 2001 (2001-03-01), pages 111 - 123, XP001108202, ISSN: 1077-260X, DOI: 10.1109/2944.954119

## Description

### DOMAINE TECHNIQUE

Le domaine de l'invention est celui des circuits photoniques sur puce, et plus précisément celui des émetteurs optoélectroniques, de type à antenne réseau à commande de phase, réalisés sur au moins une puce photonique. L'invention trouve une application notamment dans le domaine des LIDAR (*Light Detection and Ranging,* en anglais).

### ÉTAT DE LA TECHNIQUE ANTÉRIEURE

Les émetteurs optoélectroniques à antenne réseau à commande de phase (OPA, pour *Optical Phased Array,* en anglais) sont des dispositifs optoélectroniques permettant d'émettre en espace libre un faisceau lumineux, monochromatique, de manière directionnelle. Ils trouvent une application notamment dans le domaine de la détection et de l'estimation d'une distance par laser (LIDAR), mais également dans le domaine des communications optiques en espace libre, des écrans holographiques et de l'imagerie médicale.

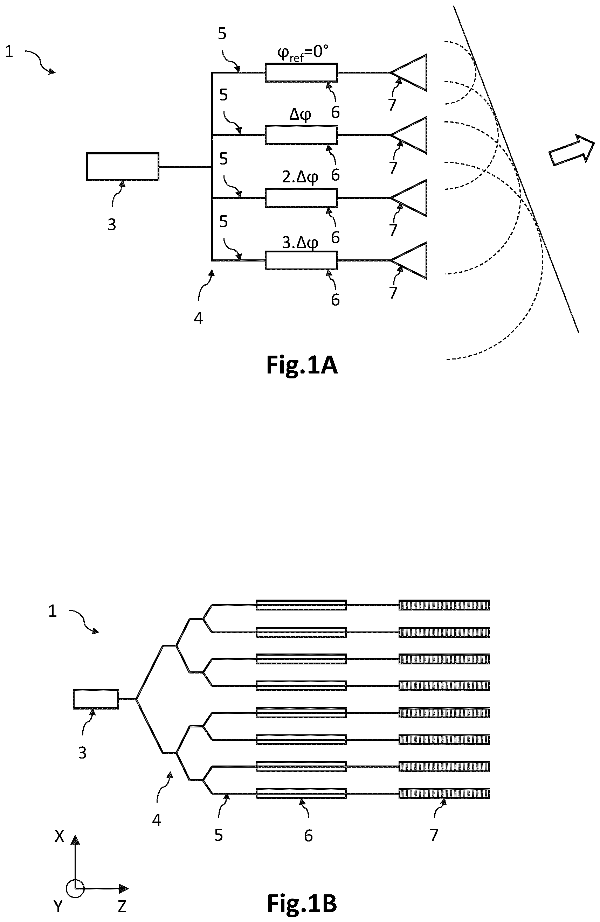

La figure 1A illustre de manière schématique le principe de fonctionnement d'un tel émetteur optoélectronique 1. Une source laser 3 émet un signal optique qui est distribué par un diviseur de puissance 4 dans N bras 5 de l'émetteur optoélectronique 1. Chaque bras 5 comporte un déphaseur 6 et un émetteur élémentaire 7 également appelé antenne optique. Chaque émetteur élémentaire 7 émet un signal optique en espace libre, par exemple par diffraction, les signaux optiques se combinant ensuite par interférence pour former un faisceau lumineux. Celui-ci présente un diagramme d'émission en champ lointain déterminé notamment par la phase relative Δφ appliquée par les déphaseurs aux signaux optiques se propageant dans les bras.

De tels émetteurs optoélectroniques peuvent être réalisés en photonique intégrée, c'est-à-dire que ses différents composants optiques (guides d'onde, diviseur de puissance, émetteurs élémentaires...) sont réalisés sur et à partir d'une même puce photonique.

A ce titre, la figure 1B illustre de manière schématique et partielle un exemple d'un tel émetteur optoélectronique 1 décrit dans l'article de Hulme et al intitulé Fully integrated hybrid silicon two dimensional beam scanner, Opt. Express 23 (5), 5861-5874 (2015). Cet émetteur optoélectronique 1 comporte une source laser 3, ici de type III-V, et est réalisé sur une même puce photonique. Il comporte donc une source laser 3 à semiconducteur, le diviseur de puissance 4, les déphaseurs 6 et les émetteurs élémentaires 7. Dans cet exemple, la source laser 3 est réalisée par report, sur la puce photonique (de type SOI), d'un matériau III-V suivi d'une structuration de celui-ci pour former le milieu à gain.

Il existe cependant un besoin de disposer d'un tel émetteur optoélectronique comportant une source laser de forte puissance. En effet, dans le cadre notamment de l'estimation d'une distance (application LIDAR), la puissance optique du signal rétrodiffusé par la scène n'est qu'une petite fraction de celle du signal optique émis. L'utilisation d'une source laser de forte puissance peut alors être nécessaire pour détecter des objets lointains. Or, la génération d'un faisceau lumineux de forte puissance optique dans un guide d'onde de faibles dimensions de la cavité optique de la source laser conduirait à une saturation du gain, voire même à une détérioration du milieu à gain. Par ailleurs, l'utilisation d'une source laser ayant une cavité optique très large conduirait à générer un faisceau lumineux de forte puissance certes, mais de qualité médiocre puisque le guide d'onde dans la cavité optique ne serait alors plus monomode.

Par ailleurs, le document US2018/0217472 A1 et l'article de Guo et al. intitulé InP Photonic Integrated Circuit with on-chip Tunable Laser Source for 2D Optical Beam Steering, Optical Fiber Communication Conference/National Fiber Optic Engineers Conference 2013, OSA Technical Digest (online) (Optical Society of America, 2013), paper OTh3I.7, décrivent des exemples d'un tel émetteur optoélectronique comportant une puce laser couplée à une puce photonique.

### EXPOSÉ DE L'INVENTION

L'invention a pour objectif de remédier au moins en partie aux inconvénients de l'art antérieur, et plus particulièrement de proposer un émetteur optoélectronique à antenne réseau à commande de phase sur puce photonique, comportant une source laser pouvant émettre un signal optique de forte puissance et de bonne qualité, la source laser étant alors couplée optiquement de manière efficace au réseau d'émetteurs élémentaires.

Pour cela, l'objet de l'invention est un émetteur optoélectronique à antenne réseau à commande de phase, comportant une puce photonique, comportant N guides d'onde formant des bras de l'émetteur optoélectronique, avec N>1 ; et une pluralité de déphaseurs et d'émetteurs élémentaires disposés dans les bras.

Selon l'invention, l'émetteur optoélectronique comporte une puce laser, distincte de la puce photonique et assemblée à celle-ci de manière coplanaire, et comportant une source laser évasée. La source laser évasée est formée d'une section droite monomode et d'une section évasée dans un plan principal, s'étendant suivant un axe optique Δ et se terminant par une surface d'émission d'un signal optique. De plus, la source laser évasée est configurée pour émettre le signal optique dont un front d'onde est circulaire dans le plan principal et centré en une position zₗ située dans la section évasée sur l'axe optique Δ.

De plus, selon l'invention, la puce photonique comporte un coupleur, assurant le couplage optique avec la source laser évasée pour collecter et transmettre au moins une partie du signal optique émis, comportant : une entrée de collection disposée en regard de la surface d'émission de la source laser évasée, et une sortie de transmission comportant N guides d'onde rectilignes couplés aux N bras de l'émetteur optoélectronique et orientés de sorte que leurs axes longitudinaux sont sécants en la position zₗ.

Certains aspects préférés mais non limitatifs de cet émetteur optoélectronique sont les suivants.

Chacun des N guides d'onde rectilignes peuvent présenter une extrémité amont orientée vers l'entrée de collection et une extrémité aval opposée. Les extrémités aval peuvent définir la sortie de transmission du coupleur et peuvent être agencées latéralement en arc de cercle avec un centre du rayon de l'arc situé en la position zₗ.

Le coupleur peut être un coupleur en étoile comportant : une région à propagation libre réalisée en un milieu d'indice de réfraction homogène, présentant une face d'entrée formant l'entrée de collection et couplée à la surface d'émission de la source laser évasée, et une face de sortie courbée en arc de cercle dont le centre du rayon de l'arc est situé en la position zₗ ; et les guides d'onde rectilignes sont des guides d'onde de sortie, raccordés chacun à la face de sortie d'une part et aux N bras d'autre part, rectilignes et orientés longitudinalement en direction de la position zₗ, dont les extrémités aval sont agencées latéralement suivant une ligne formant la sortie de transmission courbée en arc de cercle avec un centre du rayon de l'arc situé en la position zₗ.

Les guides d'onde de sortie peuvent être des guides en pointe, et présenter une largeur qui diminue à partir de la face de sortie de la région à propagation libre.

Les guides d'onde rectilignes peuvent être des guides d'onde en pointe rectilignes et orientés longitudinalement en direction de la position zₗ, et agencés latéralement de sorte que leurs extrémités amont sont disposées suivant une ligne formant l'entrée de collection et leurs extrémités aval sont disposées suivant une ligne formant la sortie de transmission, les entrée de collection et sortie de transmission étant courbées en arc de cercle avec un centre du rayon de l'arc situé en la position zₗ.

La puce photonique peut être espacée de la puce laser suivant l'axe optique Δ d'une valeur inférieure ou égale à 1µm. Elles peuvent être assemblées l'une à l'autre par une couche adhésive.

Les bras peuvent être rectilignes et parallèles entre eux, et être raccordés à la sortie de transmission par des portions de raccord de différentes longueurs.

La puce photonique peut être réalisée à partir d'un substrat SOI.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1A, déjà décrite, est une vue schématique et partielle, d'un émetteur optoélectronique selon un exemple de l'art antérieur ;
la figure 1B, déjà décrite, est une vue de dessus, schématique et partielle, d'un émetteur optoélectronique réalisé sur une même puce photonique, selon un exemple de l'art antérieur;
la figure 2A est une vue de dessus, schématique et partielle, d'un émetteur optoélectronique selon un mode de réalisation, dans lequel le coupleur est un coupleur en étoile ;
la figure 2B est une vue de dessus illustrant plus précisément la puce laser et le coupleur de l'émetteur optoélectronique de la fig.2A ;
la figure 2C est une vue de dessus illustrant plus précisément la puce photonique de l'émetteur optoélectronique de la fig.2A ;
la figure 3 est une vue de dessus, schématique et partielle, d'un émetteur optoélectronique selon une variante de réalisation, dans lequel le coupleur est formé de guides d'onde en pointe ;
la figure 4 est vue de dessus, schématique et partielle, d'une structure comportant plusieurs émetteurs optoélectroniques réalisés sur les mêmes puces laser et photonique.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un émetteur optoélectronique à antenne réseau à commande de phase, comportant une source laser évasée. Un tel émetteur optoélectronique comporte une puce photonique sur laquelle est réalisé l'ensemble de déphaseurs et d'émetteurs élémentaires, et une puce laser, distincte de la puce photonique et assemblée à celle-ci de manière coplanaire, sur laquelle est réalisée la source laser évasée.

L'émetteur optoélectronique est adapté à émettre un faisceau lumineux dont l'intensité présente, en champ lointain, une répartition angulaire déterminée autour d'un axe d'émission principal. On appelle 'diagramme d'émission en champ lointain' cette répartition angulaire du faisceau lumineux en champ lointain émis par l'émetteur optoélectronique. Il se distingue ainsi des diagrammes d'émission en champ proche des émetteurs élémentaires (antennes optiques). Le champ lointain (ou zone de Fraunhofer) correspond à une distance D supérieure au rapport entre le carré d'une grande dimension de l'émetteur élémentaire (ici, la longueur Lₑₑ suivant l'axe Z) sur la longueur d'onde d'émission λₑ, autrement dit : D > 2Lₑₑ²/λₑ.

Par ailleurs, la source laser évasée peut être du type de celle décrite notamment dans l'article de Wenzel et al. intitulé High-brightness diode lasers, C.R. Physique 4 (2003), 649-661. Elle comporte un guide d'onde actif (situé dans la cavité optique) formé d'une section droite monomode suivie d'une section évasée, laquelle se termine par une surface d'émission de la source laser. La section droite monomode peut être de type ruban (*ridge,* en anglais) de faibles dimensions transversales de manière à former un filtre spatial et forcer le signal optique à être monomode transverse, et la section évasée peut assurer l'amplification du signal optique. La surface d'émission de la source laser évasée peut alors présenter une largeur de l'ordre d'une à plusieurs centaines de microns. Une telle source laser évasée peut ainsi émettre un signal optique de forte puissance, par exemple de l'ordre de plusieurs watts.

Selon l'invention, la puce photonique comporte un coupleur assurant la fonction de couplage optique entre la source laser évasée et les N bras comportant les déphaseurs et les émetteurs élémentaires, ainsi que la fonction de division de puissance.

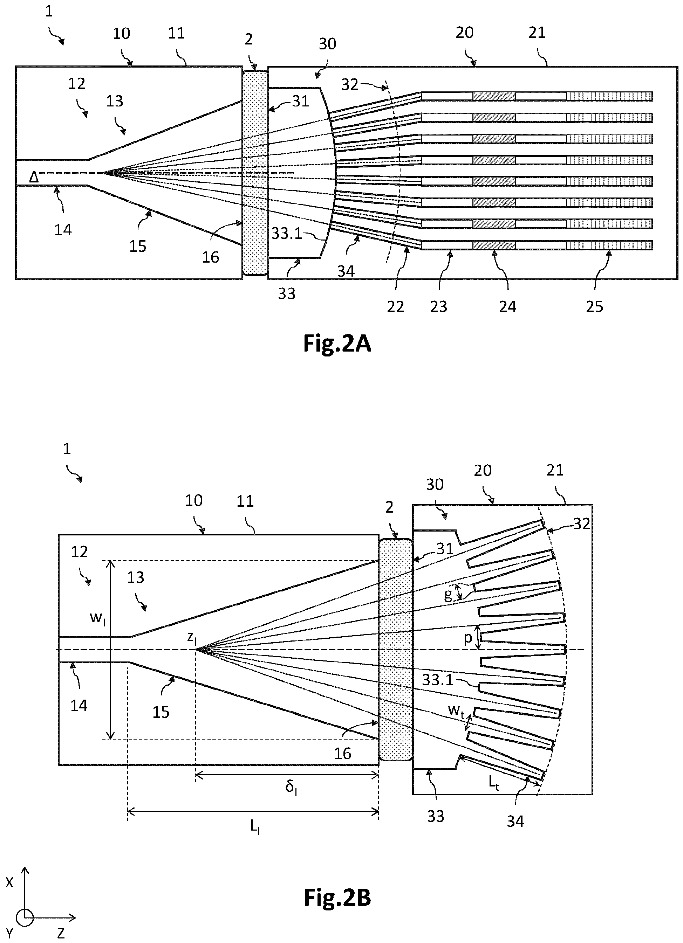

La figure 2A est une vue schématique et partielle d'un émetteur optoélectronique 1 selon un mode de réalisation, dans lequel la puce laser 10 est couplée optiquement et de manière coplanaire à la puce photonique 20.

On définit ici et pour la suite de la description un repère direct orthonormé XYZ, où le plan XZ est parallèle au plan principal de la puce laser 10 et de la puce photonique 20, et où l'axe longitudinal Z est orienté suivant l'axe optique Δ de la source laser évasée 12. L'axe X est appelé axe horizontal, et l'axe Y est appelé axe vertical. Les termes « amont » et « aval » font référence à un positionnement croissant suivant le sens de propagation du signal optique, ici suivant la direction +Z.

La puce laser 10 est distincte de la puce photonique 20, et comporte la source laser évasée 12. Celle-ci est adaptée à émettre un signal optique monochromatique pulsé ou continu, de longueur d'onde λₑ par exemple égale à 905nm environ, voire à 1550nm. Elle est dite évasée dans le sens où le guide d'onde actif 13 situé dans la cavité optique comporte, suivant un axe optique Δ, une section droite monomode 14 suivie d'une section évasée 15 se terminant par une surface d'émission 16. Aussi, la répartition spatiale dans un plan XY de l'intensité du signal optique émis est elliptique et 'aplatie' : elle présente, en champ proche, une petite dimension suivant l'axe vertical Y, par exemple de l'ordre du micron, et une grande dimension suivant l'axe horizontal X, par exemple de l'ordre de la centaine de microns, avec un rapport de forme (grande dimension sur petite dimension) de l'ordre de 50 à 100, voire davantage. La source laser évasée 12 peut être réalisée de manière identique ou similaire à l'article de Delepine et al. intitulé How to Launch 1 W Into Single-Mode Fiber from a Single 1.48µm Flared Resonator, IEEE Journal on Selected Topics in Quantum Electronics, Vol. 7, No. 2, (2001), 111-123.

Elle comporte un substrat support 11 sur laquelle repose une couche active (non représentée) comportant des puits quantiques multiples qui s'étendent dans le plan XZ. La couche active peut être encadrée suivant l'axe vertical Y par des couches de confinement. Une couche supérieure structurée recouvre la couche active, dans laquelle un guide d'onde dit actif est formé et s'étend suivant l'axe optique Δ.

Ce guide d'onde actif 13 comporte une section droite monomode 14 de type ruban (*ridge,* en anglais), définie latéralement dans le plan XZ par gravure localisée. Cette section droite monomode 14 présente des dimensions transversales telles qu'un seul mode optique transverse guidé, par exemple le mode transverse fondamental est supporté à la longueur d'onde d'émission λₑ. Par ailleurs, la section droite monomode 14 présente une fonction de filtrage modal dans la mesure où les modes transverses d'ordres supérieurs éventuellement excités dans la section évasée 15 ne peuvent être guidés dans la section droite monomode 14.

Il comporte également une section évasée 15, définie dans le plan XZ de la couche supérieure par dopage localisé. Le mode optique y est alors guidé par le gain d'amplification. La section 15 est dite évasée dans la mesure où elle présente une largeur dans le plan XZ qui augmente de manière ici linéaire à mesure que l'on s'éloigne de la section droite monomode 14. Elle peut présenter un angle d'inclinaison par rapport à l'axe optique Δ de l'ordre de quelques degrés, par exemple compris entre 4° et 6° environ. La section évasée 15 délimite la surface d'émission 16 de la source laser évasée 12, qui s'étend de manière orthogonale à l'axe optique Δ. La surface d'émission 16 présente alors une largeur wₗ, suivant ici l'axe horizontal X, de l'ordre d'une à plusieurs centaines de microns.

Notons qu'une source laser évasée 12 est intrinsèquement astigmate, dans le sens où le plan du waist horizontal (i.e. dans le plan XZ) est situé à une position différente du plan du waist vertical (i.e. dans le plan YZ). De manière connue, le plan du waist d'une source laser, littéralement plan du rayon de col, est situé en une position où le front d'onde considéré (horizontal ou vertical) est plan (rayon de courbure infini). Comme l'indique notamment l'article de Delepine et al. 2001, le plan du waist horizontal est situé dans le guide d'onde actif 13, et plus précisément dans la section évasée 15, à une position zₗ distante de la surface d'émission 16 d'une valeur δₗ non nulle suivant l'axe optique Δ, alors que le plan du waist vertical est situé au niveau de la surface d'émission 16 (δₗ=0). La distance δₗ (et donc la position zₗ) peut être déterminée par un analyseur de front d'onde.

Aussi, le signal optique émis présente, dans le plan XZ qui est le plan principal de la puce laser 10 et celui de la puce photonique 20, un front d'onde circulaire dont le centre est situé en la position zₗ. Autrement dit, dans le plan XZ, le signal optique émis par la source laser évasée 12 semble émis à partir de la position zₗ.

La puce photonique 20 comporte les N bras 23 de l'émetteur optoélectronique 1 dans lesquels sont situés les déphaseurs 24 et les émetteurs élémentaires 25. Elle est distincte de la puce laser 10 dans le sens où ces deux puces comportent leur propre substrat support 11, 21. Elle comporte en outre un coupleur 30 intégré (réalisé sur la puce photonique 20) qui assure d'une part le couplage optique avec la puce laser 10, et d'autre part la division de puissance du signal optique reçu en direction des N bras 23.

La puce photonique 20, également appelée circuit intégré photonique (PIC, pour *Photonic Integrated Circuit,* en anglais), comporte un substrat support 21 à partir duquel peuvent être réalisés des composants photoniques actifs (modulateurs, diodes...) et passifs (guides d'onde, multiplexeurs ou démultiplexeurs...) couplés optiquement les uns aux autres. Dans le cadre de la photonique sur silicium, le substrat support 21 et les composants photoniques sont réalisés à base de silicium. Le substrat support 21 peut ainsi être de type silicium sur isolant (SOI, pour *Silicon On Insulator,* en anglais). Toutefois, de nombreuses autres plateformes technologiques peuvent être utilisées. Typiquement, l'utilisation de guides d'onde réalisés en silicium pour des applications à 905nm n'est pas recommandée puisque le silicium absorbe à cette fréquence. On pourra donc utiliser par exemple du nitrure de silicium (SiN), du nitrure d'aluminium (AIN), des guides en silice dopée, etc...

La puce photonique 20 présente une première face latérale située en regard de la surface d'émission 16 de la puce laser 10, de sorte que le coupleur 30 puisse collecter une partie importante du signal optique émis par la source laser évasée 12. La puce laser 10 et la puce photonique 20 sont assemblées de manière coplanaire, dans le sens où le signal optique se propage dans un même plan XZ en passant de la puce laser 10 à la puce photonique 20.

Elles sont assemblées l'une à l'autre ici par une couche 2 d'un matériau adhésif, tel qu'une colle optique, dont l'indice de réfraction est choisi pour ne pas perturber la propagation du signal optique. Les puces 10, 20 ne sont donc pas couplées optiquement l'une à l'autre par des éléments optiques passifs tels que des lentilles. L'indice de réfraction de la colle optique 2 peut être identique à celui du matériau de gaine des guides d'onde du coupleur 30. A titre d'exemple, le coupleur 30 et les guides d'onde des bras 23 peuvent être réalisés en un nitrure de silicium et la gaine en un oxyde de silicium. De plus, l'espacement entre la puce laser 10 et la puce photonique 20 suivant l'axe longitudinal Z est de préférence inférieur à 1µm pour collecter le maximum du signal optique émis par la source laser évasée 12 (dans la mesure où le signal diverge). La couche adhésive 2 peut toutefois ne pas être utilisée, et le signal optique émis peut être transmis dans l'air entre les deux puces. Quoi qu'il en soit, l'émetteur optoélectronique 1 présente alors une compacité importante, et on évite que l'efficacité de couplage soit impactée par les erreurs de positionnement relatif entre les éléments optiques passifs qui auraient pu être utilisés, en particulier des erreurs de positionnement suivant l'axe X.

Le coupleur 30 est adapté à collecter et à transmettre au moins une partie du signal optique émis par la source laser évasée 12 dans les N bras 23. D'une manière générale, le coupleur 30 comporte une entrée de collection 31 du signal optique incident, et une sortie de transmission 32 du signal optique collecté à laquelle les N bras 23 sont couplés.

L'entrée de collection 31 présente des dimensions transversales dans le plan XY ayant, de préférence, un rapport de forme au moins du même ordre de grandeur que celui de la répartition spatiale de l'intensité du signal optique émis. Plus précisément, l'entrée de collection 31 présente une hauteur suivant l'axe vertical Y correspondant à l'épaisseur d'une couche guidante de la couche photonique dans laquelle sont réalisés le coupleur 30 et les guides d'onde des bras 23, par exemple de l'ordre du micron (de quelques dizaines de nanomètres à quelques microns), et une largeur suivant l'axe horizontal X de l'ordre d'une à plusieurs centaines de microns. Ainsi, le coupleur 30 est en mesure de recevoir une partie importante du signal optique émis.

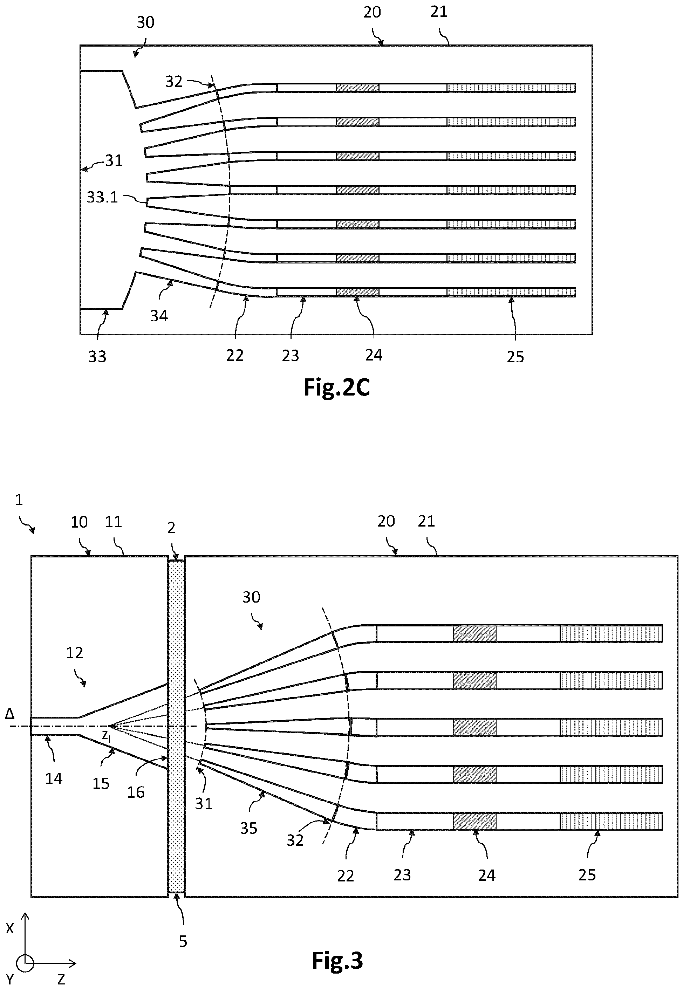

Par ailleurs, la sortie de transmission 32 comporte N guides d'onde rectilignes couplés aux N bras 23 de l'émetteur optoélectronique 1 et orientés de sorte que leurs axes longitudinaux sont sécants en la position zₗ (aux incertitudes de réalisation près). Les guides d'onde rectilignes peuvent être les guides d'onde de sortie 34 illustrés sur les fig.2A à 2C, ou être les guides d'onde en pointe 35 illustrés sur la fig.3. Cette orientation longitudinale des N guides d'onde rectilignes permet d'optimiser l'efficacité de collection du signal optique émis.

Les N guides d'onde rectilignes présentent chacun une extrémité amont orientée vers l'entrée de collection 31 et une extrémité aval opposée. De préférence, les extrémités aval des guides d'onde rectilignes définissent la sortie de transmission 32, et sont agencées latéralement (i.e. suivant l'axe X) en arc de cercle avec un centre du rayon de l'arc situé en la position zₗ, ce qui permet d'optimiser l'efficacité de transmission du signal optique collecté en direction des bras 23 de l'émetteur optoélectronique 1.

Dans l'exemple des fig.2A à 2C, la sortie de transmission 32 est courbe en arc de cercle avec un centre du rayon de l'arc situé sensiblement en la position zₗ. Ainsi, la sortie du coupleur 30 présente une courbure qui coïncide avec la courbure du front d'onde du signal optique émis par la source laser évasée 12 et reçu par le coupleur 30. Ainsi, comme indiqué précédemment, on optimise l'efficacité de transmission du signal optique collecté (outre le fait que l'efficacité de collection du signal optique émis est optimisée), et on évite également d'introduire une erreur de phase dans le signal optique transmis (les erreurs de phase pourront toutefois être corrigées par les déphaseurs 24). On peut tenir compte ici de la légère différence entre le front d'onde du signal optique émis par la source et le front d'onde du signal optique reçu par le coupleur 30 du fait de la différence d'indice de réfraction entre le matériau de la couche active de la source laser évasée 12 et celui du coupleur 30.

Dans ce mode de réalisation, le coupleur 30 est un coupleur en étoile. Il comporte une région à propagation libre 33 (FPR) et des guides d'onde de sortie 34. L'entrée de collection 31 est ici une face d'entrée de la région FPR 33, ici orthogonale à l'axe optique Δ et située en regard de la source laser évasée 12. Elle peut présenter une dimension longitudinale suivant l'axe X supérieure à celle de la surface d'émission 16. La sortie de transmission 32 est ici formée par les extrémités aval des guides d'onde de sortie 34 et présente une courbure en arc de cercle dont le centre du rayon de l'arc est positionné en la position zₗ de la source laser évasée 12. La région FPR 33 est formée par un milieu d'indice de réfraction homogène et est délimitée suivant l'axe optique Δ par l'entrée de collection 31 et par une face de sortie 33.1 à laquelle sont couplées les guides d'onde de sortie 34. La face de sortie 33.1 est également courbe en arc de cercle dont le centre du rayon de l'arc est également positionné en la position zₗ de la source laser évasée 12. Le coupleur 30 comporte donc N guides d'onde de sortie 34, dimensionnés pour optimiser la collection du signal optique émis, puis la transmission du signal optique collecté, et sont de préférence géométriquement identiques les uns aux autres. Sur la fig.2A, ils s'étendent à partir de la face de sortie 33.1 de la région FPR 33 jusqu'au trait en pointillé en arc de cercle qui illustre la sortie de transmission 32.

Les N guides d'onde de sortie 34 assurent la transmission du signal optique collecté en direction des N guides d'onde des bras 23. Ils sont raccordés aux bras 23 par des portions de raccord 22, comme l'illustre plus précisément la figure 2C. Ils sont ici des guides d'onde en pointe (*taper,* en anglais) avec une largeur dans le plan XY qui diminue suivant la direction de propagation du signal optique de manière adiabatique pour optimiser l'efficacité de transmission du coupleur 30. La largeur peut ainsi diminuer de manière monotone, voire linéaire. Comme l'illustre la figure 2B, ils présentent des dimensions identiques les uns des autres, en termes de longueur Lₜ et de dimensions transversales wt(z). Ils sont rectilignes et sont chacun orientés longitudinalement en direction de la position zₗ de la source laser évasée 12. Les extrémités amont des guides d'onde de sortie 34, ainsi que les extrémités aval, sont agencées latéralement (dans le plan XZ et suivant l'axe X) suivant un arc de cercle dont le centre du rayon de l'arc est situé en la position zₗ. Les extrémités amont des guides d'onde de sortie 34 sont raccordées à la face de sortie 33.1 en arc de cercle de la région FPR 33, et les extrémités aval des guides d'onde de sortie 34 sont situées sur la sortie de transmission 32 illustrée par le trait en arc de cercle centré sur la position zₗ.

A titre d'exemple, comme l'illustre la figure 2B qui est une vue de dessus, schématique et partielle, illustrant en détail la source laser évasée 12 et le coupleur 30, la source laser évasée 12 peut émettre un signal optique à une longueur d'onde λₑ égale à 905nm. La section évasée 15 présente une longueur Lₗ de 2000µm et une largeur maximale wₗ de 150µm au niveau de la surface d'émission 16. La source laser évasée 12 présente ici un astigmatisme tel que la distance δₗ est égale à 600µm environ. Le coupleur 30 comporte ici 100 guides d'onde de sortie 34 réalisés dans la couche guidante en un nitrure de silicium d'une épaisseur de 0.3µm, et agencés au niveau de la face de sortie de la région FPR 33 avec un pas P suivant l'axe X égal à 1.3µm environ. Chaque guide d'onde de sortie 34 présente une longueur Lₜ de 100µm et une largeur maximale wₜ de 1.2µm en son extrémité amont. Les extrémités amont sont espacées les unes des autres d'un espacement g égal à 0.1µm environ. Dans ces conditions, au moins 90% du signal optique émis est collecté et transmis dans les guides d'onde de sortie 34.

Ainsi, le coupleur 30 présente une efficacité de collection et de transmission élevée dans la mesure où les guides d'onde de sortie 34 sont rectilignes et orientés longitudinalement vers la position zₗ et dans la mesure où la sortie de transmission 32 est courbe en arc de cercle ayant son centre en la position zₗ, c'est-à-dire ayant une courbure sensiblement identique à celle du front d'onde du signal optique émis. On évite également d'introduire des erreurs de phase dans les signaux optiques transmis par les différents guides d'onde de sortie 34 (erreurs de phase qui pourront malgré tout être corrigées par les déphaseurs 24) et on optimise l'efficacité de transmission. Par ailleurs, l'entrée de collection 31 du coupleur 30 présente avantageusement des dimensions transversales (horizontale suivant l'axe X, et verticale suivant l'axe Y) au moins du même ordre de grandeur que celles de la répartition spatiale dans le plan XY de l'intensité du signal optique émis, améliorant ainsi l'efficacité de collection. Notons également qu'un tel coupleur 30 (celui de la fig.2A ou celui de la fig.3) assure une répartition d'intensité dans les bras 23 de forme gaussienne et non pas une répartition égale d'un bras à l'autre. Cette répartition gaussienne permet d'éliminer les lobes latéraux de la distribution d'intensité en champ lointain du faisceau lumineux émis par l'émetteur optoélectronique 1. En effet, une répartition égalitaire se traduit par une distribution d'intensité en champ lointain en forme de sinus cardinal.

Le coupleur 30 assure donc la fonction de division de puissance du signal optique collecté en direction des N bras 23. Les guides d'onde de sortie 34 sont raccordés aux N bras 23 par des portions de raccord 22. Dans la mesure où les N bras 23 sont ici de préférence rectilignes et parallèles entre eux, les portions de raccord 22 sont courbes (sauf celle qui est dans la prolongation de l'axe optique Δ) et présentent une longueur différente d'une portion de raccord à l'autre. Notons que les portions de raccord 22 et les bras 23 peuvent présenter une même largeur, égale à celle des guides d'onde de sortie 34 en leur extrémité aval. Comme indiqué plus loin, le déphasage introduit par les portions de raccord 22 est corrigé par les déphaseurs 24.

L'émetteur optoélectronique 1 comporte également un ensemble de déphaseurs 24 et d'émetteurs élémentaires 25. Plus précisément, au moins une partie des bras 23 est équipée d'au moins un déphaseur 24 adapté à modifier la phase du signal optique circulant dans le bras 23 considéré, et ainsi de générer une différence de phase Δφ, ou phase relative, entre les signaux optiques circulant dans les bras 23 adjacents. Les déphaseurs 24 sont disposés entre le coupleur 30 et les émetteurs élémentaires 25. Chaque bras 23 peut être équipé d'un déphaseur, ou seulement une partie des bras 23, comme par exemple un bras 23 sur deux. De plus, le bras 23 de référence peut ne pas comporter de déphaseurs 24.

Les déphaseurs 24 peuvent être des déphaseurs à effet électro-réfractif ou à effet thermo-optique. Dans les deux cas, la modification de la phase est obtenue par une modification de l'indice de réfraction du matériau formant le cœur du guide d'onde considéré. Cette modification de l'indice de réfraction peut être obtenue par modification de la densité en porteurs libres dans le cas du déphaseur 24 électro-réfractif, ou par modification de la température appliquée dans le cas du déphaseur 24 thermo-optique.

Les déphaseurs 24 sont de préférence adaptés à appliquer une même valeur Δφ de phase relative aux signaux optiques se propageant dans les bras 23, de manière à obtenir un angle θ non nul déterminé formé par l'inclinaison de l'axe d'émission principal vis-à-vis de l'axe Y dans le plan XY (orthogonal à l'axe des émetteurs élémentaires 25). Cependant, la phase relative Δφ peut ne pas être identique entre les bras 23, soit pour obtenir un diagramme en champ lointain différent, soit pour tenir compte et compenser d'éventuelles erreurs de phase. Ces erreurs de phase peuvent provenir d'une dégradation dans le temps de certains composants de l'émetteur optoélectronique 1, des non-uniformités lors du procédé de fabrication, des tolérances non nulles du procédé de fabrication, de l'impact de l'environnement de l'émetteur optoélectronique 1 (par ex., effet éventuel des éléments d'encapsulation (*packaging*) recouvrant les émetteurs élémentaires 25).

Notons ici que les déphaseurs 24 peuvent donc corriger le déphasage indésirable introduit par les portions de raccord 22 (du fait de leur longueur différente d'une portion à l'autre). Cette correction peut avoir été prise en compte lors d'une étape préalable de calibration de l'émetteur optoélectronique.

L'émetteur optoélectronique 1 comporte N émetteurs élémentaires 25, ou antennes optiques, couplés aux bras 23, et donc disposés en aval des déphaseurs 24. La phase relative Δφ entre les signaux optiques émis par les émetteurs élémentaires 25 détermine notamment la valeur de l'angle θ que forme l'axe d'émission principal du faisceau lumineux en champ lointain vis-à-vis de l'axe Y dans le plan XY de l'émetteur optoélectronique 1.

Les émetteurs élémentaires 25 sont ici des réseaux de diffraction formés dans des guides d'onde des bras 23. Ils s'étendent suivant l'axe Z de manière parallèle entre eux et sont alignés suivant l'axe X, autrement dit leurs premières extrémités présentent la même position suivant l'axe Z, tout comme leurs deuxièmes extrémités. Ils sont espacés les uns des autres d'une distance de préférence comprise entre λₑ/2 et 2λₑ. A titre informatif, le nombre N d'émetteurs élémentaires 25 peut aller d'une dizaine à une dizaine de milliers.

Ainsi, les signaux optiques circulant dans les bras 23 sont en partie transmis en espace libre par diffraction par les émetteurs élémentaires 25. Les signaux optiques extraits se propagent en espace libre, se recombinent par interférence, et forment ainsi en champ lointain le faisceau lumineux émis par l'émetteur optoélectronique 1 dont la répartition angulaire autour de l'axe d'émission principal est déterminée et définit le diagramme d'émission en champ lointain de l'émetteur optoélectronique 1.

L'angle θ que forme l'axe d'émission principal vis-à-vis de l'axe Y dans le plan YZ dépend, de manière connue, de la longueur d'onde d'émission λₑ de la source laser évasée 12 et de la période Λ du réseau de diffraction que forment les émetteurs élémentaires 25. Comme indiqué précédemment, l'angle θ de l'axe d'émission principal vis-à-vis de l'axe Y dans le plan XY dépend de la valeur de la phase relative Δφ appliquée par les déphaseurs 24 aux signaux optiques circulant dans les bras 23. Il est généralement souhaité qu'une phase relative Δφ nulle se traduise par un angle θ nul, c'est-à-dire que l'axe d'émission principal du faisceau lumineux en champ lointain est parallèle à l'axe Y. Ceci est généralement déterminé lors d'une étape préalable de calibration de l'émetteur optoélectronique.

Notons qu'il peut être souhaité de connecter les déphaseurs 24 à un dispositif de commande (non représenté) adapté à calibrer et à commander les déphaseurs en fonction du diagramme d'émission effectif en champ lointain de l'émetteur optoélectronique. En fonction des signaux de commande envoyés par le dispositif de commande, les déphaseurs 24 peuvent générer dans les signaux optiques circulant dans les différents bras 23 une phase relative Δφ prédéterminée, de manière à obtenir le diagramme d'émission en champ lointain désiré. Le dispositif de commande peut être formé d'une lentille interférométrique de focalisation, d'une pluralité de photodétecteurs et d'un module de commande, comme décrit dans la demande internationale PCT/EP2020/087385 déposée le 21/12/2020.

La figure 3 est une vue de dessus, schématique et partielle, d'un émetteur optoélectronique 1 comportant un coupleur 30 selon une variante de réalisation. Dans cet exemple, le coupleur 30 est formé d'un réseau de guides d'onde en pointe 35, qui présentent une variation adiabatique de leur largeur. A la différence des guides d'onde de sortie 34 raccordés à la région FPR 33 (fig.2A), les guides d'onde en pointe 35 ici présentent une augmentation de leur largeur suivant la direction du signal optique. De plus, le coupleur 30 ne comporte pas de région FPR, de sorte que les extrémités amont et les extrémités aval des guides d'onde en pointe 35 forment, respectivement, l'entrée de collection 31 et la sortie de transmission 32 du coupleur 30. Les guides d'onde en pointe 35 sont rectilignes et orientés longitudinalement vers la position zₗ. Les extrémités amont sont disposées latéralement suivant une première ligne en arc de cercle dans le plan XZ centrée sur la position zₗ, et les extrémités aval sont également disposées latéralement suivant une deuxième ligne en arc de cercle dans le plan XZ centrée sur la position zₗ. Les guides d'onde en pointe 35 présentent donc une même longueur. Comme dans l'exemple de la fig.2A, le nombre de guides d'onde en pointe 35, leurs largeur et longueur, leur agencement latéral, etc. peuvent être déterminés de manière à optimiser l'efficacité de couplage et de transmission.

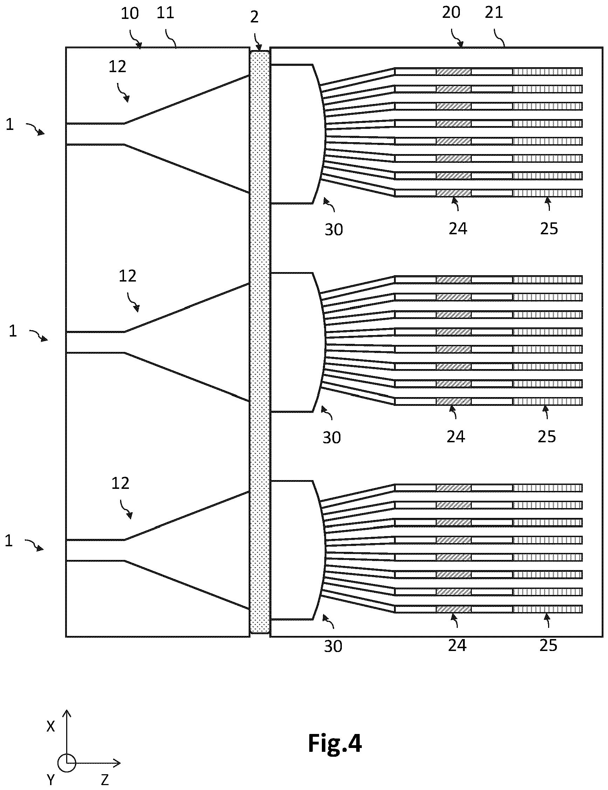

La figure 4 est une vue de dessus, schématique et partielle, d'une structure comportant plusieurs émetteurs optoélectroniques 1 agencés latéralement les uns à côté des autres. Ainsi, la puce laser 10 comporte une pluralité de sources laser évasées 12 orientées chacune suivant des axes optiques parallèles les uns aux autres, et réalisées sur le même substrat support 11. Les sources laser évasées 12 sont de préférence identiques entre elles. La puce photonique 20 comporte plusieurs ensembles de coupleurs 30, déphaseurs 24 et émetteurs élémentaires 25, chacune ensemble étant couplé optiquement à une source laser évasée 12. Ces ensembles sont réalisés sur le même substrat support 21.

Cette structure est rendue possible par la compacité des émetteurs optoélectroniques 1. De plus, la forme elliptique des signaux optiques émis par les sources laser évasées 12 permet de réduire les contraintes d'alignement des deux puces, tout en gardant une efficacité de couplage particulièrement élevée entre les sources laser évasées 12 et les coupleurs 30. Cette structure permet alors de réaliser un balayage de la scène en deux dimensions, sans utiliser des sources laser accordables particulièrement onéreuses. En effet, chaque émetteur optoélectronique 1 peut être adapté à balayer la scène dans un plan angulaire différent.

Des modes de réalisation particuliers viennent d'être décrits. Différentes variantes et modifications apparaîtront à l'homme du métier.

## Revendications

1. Emetteur optoélectronique (1) à antenne réseau à commande de phase, comportant :
∘ une puce photonique (20), comportant :
• N guides d'onde formant des bras (23) de l'émetteur optoélectronique (1), avec N>1 ;
• une pluralité de déphaseurs (24) et d'émetteurs élémentaires (25) disposés dans les bras (23) ;
∘ une puce laser (10), distincte de la puce photonique (20), comportant une source laser (12) ;
∘ **caractérisé en ce que** :
∘ la puce laser (10) est assemblée à la puce photonique (20) de manière coplanaire ;
∘ la source laser (12) est une source laser évasée :
• formée d'une section droite monomode (14) et d'une section évasée (15) dans un plan principal, s'étendant suivant un axe optique Δ et se terminant par une surface d'émission (16) d'un signal optique ;
• configurée pour émettre le signal optique dont un front d'onde est circulaire dans le plan principal et centré en une position zₗ située dans la section évasée (15) sur l'axe optique Δ ;
∘ la puce photonique (20) comporte un coupleur (30), assurant le couplage optique avec la source laser évasée (12) pour collecter et transmettre au moins une partie du signal optique émis, comportant :
• une entrée de collection (31) disposée en regard de la surface d'émission (16) de la source laser évasée (12), et
• une sortie de transmission (32) comportant N guides d'onde rectilignes (34, 35) couplés aux N bras (23) de l'émetteur optoélectronique (1) et orientés de sorte que leurs axes longitudinaux sont sécants en la position zₗ.

2. Emetteur optoélectronique (1) selon la revendication 1, dans lequel chacun des N guides d'onde rectilignes (34, 35) présente une extrémité amont orientée vers l'entrée de collection (31) et une extrémité aval opposée, les extrémités aval définissant la sortie de transmission (32) du coupleur (30) et étant agencées latéralement en arc de cercle avec un centre du rayon de l'arc situé en la position zₗ.

3. Emetteur optoélectronique (1) selon la revendication 2, dans lequel le coupleur (30) est un coupleur en étoile comportant :
• une région à propagation libre (33) réalisée en un milieu d'indice de réfraction homogène, présentant une face d'entrée formant l'entrée de collection (31) et couplée à la surface d'émission (16) de la source laser évasée (12), et une face de sortie (33.1) courbée en arc de cercle dont le centre du rayon de l'arc est situé en la position zₗ;
• les guides d'onde rectilignes sont des guides d'onde de sortie (34), raccordés chacun à la face de sortie (33.1) d'une part et aux N bras (23) d'autre part, dont les extrémités aval sont agencées latéralement suivant une ligne formant la sortie de transmission (32) courbée en arc de cercle avec un centre du rayon de l'arc situé en la position zₗ.

4. Emetteur optoélectronique (1) selon la revendication 3, dans lequel les guides d'onde de sortie (34) sont des guides en pointe, et présentent une largeur qui diminue à partir de la face de sortie (33.1) de la région à propagation libre (33).

5. Emetteur optoélectronique (1) selon la revendication 2, dans lequel les guides d'onde rectilignes sont des guides d'onde en pointe (35) agencés latéralement de sorte que leurs extrémités amont sont disposées suivant une ligne formant l'entrée de collection (31) et leurs extrémités aval sont disposées suivant une ligne formant la sortie de transmission (32), les entrée de collection (31) et sortie de transmission (32) étant courbées en arc de cercle avec un centre du rayon de l'arc situé en la position zₗ.

6. Emetteur optoélectronique (1) selon l'une quelconque des revendications 1 à 5, dans lequel la puce photonique (20) est espacée de la puce laser (10) suivant l'axe optique Δ d'une valeur inférieure ou égale à 1µm.

7. Emetteur optoélectronique (1) selon l'une quelconque des revendications 1 à 6, dans lequel la puce laser (10) et la puce photonique (20) sont assemblées l'une à l'autre par une couche adhésive (2).

8. Emetteur optoélectronique (1) selon l'une quelconque des revendications 1 à 7, dans lequel les bras (23) sont rectilignes et parallèles entre eux, et sont raccordés à la sortie de transmission (32) par des portions de raccord (22) de différentes longueurs.

9. Emetteur optoélectronique (1) selon l'une quelconque des revendications 1 à 8, dans lequel la puce photonique (20) est réalisée à partir d'un substrat SOI.

## Patentansprüche

1. Optoelektronischer Sender (1) mit Phased-Array-Antenne, der Folgendes aufweist:
∘ einen photonischen Chip (20), der Folgendes aufweist:
N Wellenleiter, die Arme (23) des optoelektronischen Senders (1) bilden, mit N>1;
eine Vielzahl von Phasenschiebern (24) und Elementarsendern (25), die in den Armen (23) angeordnet sind;
∘ einen Laserchip (10), der sich vom photonischen Chip (20) unterscheidet und eine Laserquelle (12) aufweist;
∘ **dadurch gekennzeichnet, dass**:
∘ der Laserchip (10) koplanar mit dem photonischen Chip (20) zusammengebaut ist;
o die Laserquelle (12) eine aufgeweitete Laserquelle ist:
gebildet aus einem geraden Monomode-Abschnitt (14) und einem in einer Hauptebene aufgeweiteten Abschnitt (15), der sich entlang einer optischen Achse Δ erstreckt und in einer Sendefläche (16) für ein optisches Signal endet;
konfiguriert, um das optische Signal zu senden, dessen Wellenfront in der Hauptebene kreisförmig ist und an einer Position zₗ zentriert ist, die sich in dem sich aufgeweiteten Abschnitt (15) auf der optischen Achse Δ befindet;
o der photonische Chip (20) einen Koppler (30) aufweist, der die optische Kopplung mit der aufgeweiteten Laserquelle (12) sicherstellt, um mindestens einen Teil des gesendeten optischen Signals zu sammeln und zu übertragen, und der Folgendes aufweist:
einen Sammeleingang (31), der gegenüber der Sendefläche (16) der aufgeweiteten Laserquelle (12) angeordnet ist, und
einen Übertragungsausgang (32) mit N geradlinigen Wellenleitern (34, 35), die mit den N Armen (23) des optoelektronischen Senders (1) gekoppelt und so ausgerichtet sind, dass ihre Längsachsen sich an der Position zₗ schneiden.

2. Optoelektronischer Sender (1) nach Anspruch 1, wobei jeder der N geradlinigen Wellenleiter (34, 35) ein dem Sammeleingang (31) zugewandtes vorgelagertes Ende und ein entgegengesetztes nachgelagertes Ende aufweist, wobei die nachgelagerten Enden den Übertragungsausgang (32) des Kopplers (30) definieren und seitlich in einem Kreisbogen angeordnet sind, wobei ein Mittelpunkt des Radius des Bogens an der Position zₗ liegt.

3. Optoelektronischer Sender (1) nach Anspruch 2, wobei der Koppler (30) ein sternförmiger Koppler ist, der Folgendes aufweist:
einen Bereich (33) für freie Ausbreitung, der aus einem Medium mit homogenem Brechungsindex hergestellt ist und eine Eingangsseite aufweist, die den Sammeleingang (31) bildet und mit der Sendefläche (16) der aufgeweiteten Laserquelle (12) gekoppelt ist, und eine Ausgangsseite (33.1), die zu einem Kreisbogen gekrümmt ist, wobei der Mittelpunkt des Radius des Bogens an der Position zₗ liegt;
wobei die geradlinigen Wellenleiter Ausgangswellenleiter (34) sind, die jeweils mit der Ausgangsseite (33.1) einerseits und den N Armen (23) andererseits verbunden sind, deren nachgelagerten Enden seitlich entlang einer Linie angeordnet sind, die den Übertragungsausgang (32) bildet, der in einem Kreisbogen gekrümmt ist, wobei ein Mittelpunkt des Radius des Bogens an der Position zₗ liegt.

4. Optoelektronischer Sender (1) nach Anspruch 3, wobei die Ausgangswellenleiter (34) Spitzenleiter sind und eine Breite aufweisen, die von der Ausgangsseite (33.1) des Bereichs (33) für freie Ausbreitung abnimmt.

5. Optoelektronischer Sender (1) nach Anspruch 2, wobei die geradlinigen Wellenleiter Spitzen-Wellenleiter (35) sind, die seitlich so angeordnet sind, dass ihre vorgelagerten Enden entlang einer Linie angeordnet sind, die den Sammeleingang (31) bildet, und ihre nachgelagerten Enden entlang einer Linie angeordnet sind, die den Übertragungsausgang (32) bildet, wobei der Sammeleingang (31) und der Übertragungsausgang (32) in einem Kreisbogen mit einem Mittelpunkt des Bogenradius an Position zₗ gekrümmt sind.

6. Optoelektronischer Sender (1) nach einem der Ansprüche 1 bis 5, wobei der photonische Chip (20) vom Laserchip (10) entlang der optischen Achse Δ um einen Wert kleiner oder gleich 1 µm beabstandet ist.

7. Optoelektronischer Sender (1) nach einem der Ansprüche 1 bis 6, wobei der Laserchip (10) und der photonische Chip (20) durch eine Klebeschicht (2) miteinander verbunden sind.

8. Optoelektronischer Sender (1) nach einem der Ansprüche 1 bis 7, wobei die Arme (23) geradlinig und parallel zueinander sind und mit dem Übertragungsausgang (32) durch Verbindungsabschnitte (22) unterschiedlicher Länge verbunden sind.

9. Optoelektronischer Sender (1) nach einem der Ansprüche 1 bis 8, wobei der photonische Chip (20) aus einem SOI-Substrat hergestellt ist.

## Claims

1. Phased-array optoelectronic emitter (1), comprising:
∘ a photonic chip (20), comprising:
N waveguides forming arms (23) of the optoelectronic emitter (1), with N>1;
a plurality of phase shifters (24) and of elementary transmitters (25) placed in the arms (23);
∘ a laser chip (10), distinct from the photonic chip (20), comprising a laser source (12);
∘ **characterized in that**:
∘ the laser chip (10) is joined to the photonic chip (20) in a coplanar manner;
∘ the laser source (12) is a flared laser source:
formed of a straight single-mode section (14) and of a section (15) that is flared in a main plane, and that extends along an optical axis Δ and ends in a surface (16) for emission of an optical signal;
configured to emit the optical signal, a wavefront of which is circular in the main plane and centred on a position zₗ located in the flared section (15) on the optical axis Δ;
∘ the photonic chip (20) comprises a coupler (30), ensuring optical coupling to the flared laser source (12) for collecting and transmitting at least one portion of the emitted optical signal, comprising:
a collection input (31) placed facing the emission surface (16) of the flared laser source (12), and
a transmission output (32) comprising N rectilinear waveguides (34, 35) that are coupled to the N arms (23) of the optoelectronic emitter (1) and that are oriented so that their longitudinal axes are secant at the position zₗ.

2. Optoelectronic emitter (1) according to Claim 1, wherein each of the N rectilinear waveguides (34, 35) has an upstream end oriented towards the collection input (31) and an opposite downstream end, the downstream ends defining the transmission output (32) of the coupler (30) and being arranged laterally in a circular arc with a centre of the radius of the arc located at the position zₗ.

3. Optoelectronic emitter (1) according to Claim 2, wherein the coupler (30) is a star coupler comprising:
a free propagation region (33) made of a medium of uniform refractive index, having an entrance face forming the collection input (31) and coupled to the emission surface (16) of the flared laser source (12), and an exit face (33.1) that is circularly arcuate and the centre of the radius of the arc of which is located at the position zₗ;
the rectilinear waveguides are output waveguides (34), each connected to the exit face (33.1) on the one hand and to the N arms (23) on the other hand, the downstream ends of which are arranged laterally along a line forming the transmission output (32) that is circularly arcuate with a centre of the radius of the arc located at the position zₗ.

4. Optoelectronic emitter (1) according to Claim 3, wherein the output waveguides (34) are tapered waveguides, and have a width that decreases from the exit face (33.1) of the free propagation region (33).

5. Optoelectronic emitter (1) according to Claim 2, wherein the rectilinear waveguides are tapered waveguides (35) arranged laterally so that their upstream ends are placed along a line forming the collection input (31) and their downstream ends are placed along a line forming the transmission output (32), the collection input (31) and transmission output (32) being circularly arcuate with a centre of the radius of the arc located at the position zₗ.

6. Optoelectronic emitter (1) according to any one of Claims 1 to 5, wherein the photonic chip (20) is spaced apart from the laser chip (10) along the optical axis Δ by a value less than or equal to 1 µm.

7. Optoelectronic emitter (1) according to any one of Claims 1 to 6, wherein the laser chip (10) and the photonic chip (20) are joined to each other by an adhesive layer (2).

8. Optoelectronic emitter (1) according to any one of Claims 1 to 7, wherein the arms (23) are rectilinear and parallel to one another, and are connected to the transmission output (32) by connecting segments (22) of various lengths.

9. Optoelectronic emitter (1) according to any one of Claims 1 to 8, wherein the photonic chip (20) is made from an SOI substrate.
